# EUROPÄISCHE PATENTSCHRIFT

(11) **EP 0 654 425 B1**
(45) Veröffentlichungstag und Bekanntmachung des Hinweises auf die Patenterteilung: **02.09.1998**
(21) Anmeldenummer: 93118861.9
(22) Anmeldetag: 24.11.1993
(51) Int. Cl.: B65G 1/04

(54) **Vorrichtung zum Ein-oder Aus-lagern bzw. Umstapeln von Trägern für Fördergut**
Device for soring and delivering or transferring load carriers into or out of a rack
Dispositif pour emmagasiner et délivrer ou transférer des portes-charges dans un ou d'un magasin à plusieurs étages

(43) Veröffentlichungstag der Anmeldung: 24.05.1995
(73) Patentinhaber: Schenck Handling Systems GmbH, 64293 Darmstadt (DE)
(72) Erfinder: Treib, Volker, D-64395 Brensbach (DE); Wuttke, Horst, D-64331 Weiterstadt (DE); Proske, Hans, D-64354 Reinheim (DE)
(74) Vertreter: Behrens, Helmut

(56) Entgegenhaltungen:
- EP-A- 0 029 073
- CH-A- 331 098
- DE-A- 1 957 753
- DE-A- 3 207 860

## Beschreibung

Die Erfindung betrifft eine Vorrichtung zum Ein- oder Auslagern bzw. Umstapeln von Trägern für Fördergut, insbesondere von Frachtcontainern, in bzw. aus einem Regal mit einer Vielzahl von Stellplätzen, mit einem Regalförderzeug, das entlang einer Regalseite verfahrbar ist, und das ein in die Stellplätze bewegbares Lastaufnahmemittel aufweist. Durch die CH-A-331098 ist eine solche Vorrichtung bekannt geworden, wobei dort an einem verfahrbaren Traggerüst ein Lastaufnahmemittel angeordnet ist, welches in horizontaler Richtung quer zur Bewegungsrichtung des Traggerüstes verlagerbar ist. Die Verlagerungsbewegung des Lastaufnahmemittels alleine bestimmt die Lage des Trägers für Fördergut innerhalb eines Regalfaches. Demzufolge erfordert das Einlagern in die Regalfächer, insbesondere wenn Träger unterschiedlicher Abmessungen eingelagert werden sollen, einen erheblichen Zeitaufwand.

Aus der EP-A-0029073 ist ein Warenlager bekannt geworden, dessen Umlaufpaletten eine Länge besitzen, die der gesamten Tiefe eines Stellplatzes entspricht. Der Fördervorrichtung für diese Umlaufpaletten ist ein zusätzlicher Querförderer zugeordnet, der insbesondere in Kombination mit einem weiteren Förderer für Umlaufpaletten, auch ein Komissionieren ermöglicht. Bei dieser bekannten Vorrichtung muß zum Positionieren des Trägers auf der Umlaufpalette der Träger zunächst von der Palette entnommen werden, dann muß eine Verschiebebewegung mittels des Querförderers erfolgen und schließlich muß der Träger wieder auf die Umlaufpalette aufgesetzt werden. Auch dieses mit einem sehr hohen apparativen Aufwand verbundene Verfahren wird nicht immer den steigenden Anforderungen an die Einlagergeschwindigkeit gerecht.

Durch die deutsche Patentschrift 28 39 496 C2 ist ein Verfahren zum Übergeben von Fördergut von einem schienengebundenen angetriebenen Rollenförderer, dessen Förderrichtung quer zu seiner Fahrtrichtung ist, auf einen als Lagerplatz ausgebildeten antreibbaren Förderer mit Reibschluß bekannt geworden, das sich dadurch auszeichnet, daß der schienengebundene angetriebene Rollenförderer in Förderrichtung bis zum Reibschluß mit dem antreibbaren Rollenförderer verfahren wird.

Eine Vorrichtung zur Durchführung dieses Verfahrens mit einem auf einem Schienenenfahrwerk angeordneten angetriebenen Rollenförderer, mit einem Reibradgetriebe, mit einem Antrieb für den angetriebenen Rollenförderer und mit einem als Lagerplatz ausgebildeten antreibbaren Rollenförderer zeichnet sich dadurch aus, daß ein weiterer zwischen dem angetriebenen Rollenförderer und dem Schienenfahrwerk angeordneter Antrieb (Spindelantrieb oder Kettenantrieb) den angetriebenen Rollenförderer, welcher sich auf quer zur Fahrrichtung angeordneten Führungen (Führungsrollen oder Schienenstück) abstützt, bis zur Anlage des Reibrades mit vorgebbarem Anpreßdruck an einer Reibbandage des antreibbaren Rollenförderers vorschiebt.

Bei dem hier bekanntgewordenen Verfahren und der hierzu gehörenden Vorrichtung ist es erforderlich, daß sowohl die Beschickeinrichtung als auch die Lagereinrichtung mit Rollen versehen sind. Bei einer Ausstattung eines Lagers mit derartigen Rollen als Fachböden für das einzelne Fach ist der Aufwand für die Herstellung eines derartigen Hochregallagers und die hierfür erforderlichen Wartungskosten offensichtlich sehr hoch, auch ist es hierzu erforderlich, einen zusätzlichen Aufzug an das Hochregallager anzuschließen und zusätzlich in jedem Lagergang einen derartigen Rollenförderer zur Beschickung der einzelnen Fächer der Regale vorzusehen. Darüberhinaus ist ein Umstapeln innerhalb des Hochregallagers nur mit mehrmaligem Absetzen durchführbar.

Durch die EP-A-0 133 472 ist ein Hochregallager bekannt geworden, bei welchem ein ankommendes Frachtstück über eine Hilfseinrichtung, einen Aufzug, zugeführt wird, das Frachtstück dann in eine bestimmte Etage gebracht wird, dort übernommen wird von einem weiteren Hilfsfahrzeug, welches nunmehr in den einzelnen Gassen dieses Hochregallagers, das Frachtstück oder den Container vor den entsprechenden Lagerplatz fährt und mittels einer Hub- und Senkbewegung den Container am Lagerplatz abstellt. Mit einer derartigen Einrichtung ist lediglich das Ein- und Ausspeichern von Containern möglich.

Durch die deutsche Offenlegungsschrift 32 07 860 A1 ist eine Fördereinrichtung für eine Lagerhausanlage bekannt geworden, bei welcher mit Hilfe eines Aufzugs Container großer Abmessungen in die einzelnen Stockwerke des Lagerhauses gebracht werden, dort mit Hilfe eines weiteren Fördergerätes weiterbehandelt werden. Hierzu besitzt dieses Fördergerät zusätzliche heb- und senkbare Förderwagen mit Eigenantrieb, die entweder einen großen Container oder zwei kleine Container aufnehmen, um diese nach einer Gassenfahrt in das entsprechende Fach des Regals einzulagern und nach Absenken der Hilfswagen und Zurückfahren dieser auf den Gassenwagen ein neues Förderspiel beginnen kann; sei es zum Beladen oder Entladen eines Stellplatzes. Ein Umstapeln einzelner Container ist nur möglich durch mehrmaliges Absetzen dieser Container an Zwischenlagerstellen, um letztlich den Platz einnehmen zu können, an welchem sie beispielsweise für die Zusammenstellung einer neuen Charge endständig abgelagert werden können.

Der Einsatz von zusätzlichen Aufzügen bringt darüberhinaus beim Ein- und Auslagern zwingend einen zusätzlichen weiteren Förderschritt, womit der Einlagerungs- bzw. Auslagerungszyklus zwangsläufig verlängert wird. Auch ist bei einem Umstapeln innerhalb einer Etage für diesen Zeitraum der Aufzug blockiert, mit anderen Worten, ankommende oder abgehende Container aus diesem Stockwerk können nicht transportiert werden. Oder bei einer Umstapelung in eine andere Stockwerksebene ist der Aufzug zusätzlich blockiert für die Annahme oder Abgabe von Containern, da hier der Aufzug als weiteres Hilfmittel für die Umstapelung benutzt wird.

Gleiches gilt auch, wenn Paletten großer Abmessungen transportiert werden müssen oder auch große Werkstücke, die für sich eigensteif genug sind, um ohne jede Stützkonstruktion in einem Hochregallager gefördert zu werden.

Durch die oben genannten Verfahren und Einrichtungen ist es auch nicht möglich, einen willkürlichen Stellplatz eines zwischenzulagernden oder endständigzulagernden Fördergutes vorab auszuwählen.

Ausgehend hiervon liegt der vorliegenden Erfindung die Aufgabe zugrunde, für eine Ein- oder Auslagerung bzw. Umstapelung von Förderbehältern unterschiedlicher Abmessungen, insbesondere von Containern, in bzw. aus mehretagigen Lagern, die bei der endständigen Lagerung in einem Gestell des Lagers einzunehmende Position des Behälters vorab zu bestimmen. Diese Aufgabe wird erfindungsgemäß mit einer Vorrichtung der eingangs genannten Gattung durch die Merkmale des Kennzeichenteils des Anspruchs 1 gelöst.

Die durch die Merkmale des Anspruchs 1 gekennzeichnete Vorrichtung erlaubt es, daß nach einem Positionieren des beladenen oder unbeladenen Trägers für Fördergut auf dem Regalförderzeug auf eine der endständigen Position in einem Regalfach entsprechenden Position der Träger zielgerecht im Regalfach durch das Regalförderzeug abgelegt wird. Damit wird es erstmals möglich, bei der gemischten Anlieferung von Groß-, Mittel- und Kleincontainern, beispielsweise bei der Entladung von Flugzeugen, jede freie Stellfläche im Regal zu nutzen und bei einer Auslagerung durch entsprechendes Umpositionieren des ersten entnommenen Kleincontainers während der Auslagerungsfahrt des Regalförderzeugs auf dem Regalförderzeug einen oder mehrere weitere Kleincontainer mit aufzunehmen. Damit wird ohne Zeitverzögerung und ohne zwangsläufiges Blockieren der Beschickeinrichtung während eines erforderlich werdenden Umsetzens eine Charge in geforderter Reihung am Ausgang eines Hoch- oder Tiefregallagers an eine weiter führende Fördereinrichtung abgegebenen, beispielsweise direkt an Lastkraftwagen, oder an eine Förderstrecke zu einem Frachtflugzeug. Auch ist es beim Übergeben von Fördergut direkt an ein Flugzeug über ein sogenanntes nose dock möglich, ohne weitere Umsortierung bei einem Ausgabezyklus sowohl dieses zu versorgen als auch bei einer Weiterfahrt des Regalförderzeugs beispielsweise in eine Erdgeschoßlage auf diesem Auslagerungsweg anschließend einen LKW noch zu beschicken oder zu entladen. Das vom LKW entladene Gut kann dann wahlweise im Hochregallager oder auch im Tiefregallager durch das Regalförderzeug abgelegt werden.

Die erfindungsgemäße Lösung gestattet, daß beim Umstapeln in andere Regalfächer innerhalb eines Hoch- oder Tiefregallagers die erste endständige Position auf dem Regalförderzeug beibehalten wird, bei Übereinstimmung dieser mit der endständigen Position im anderen Regalfach oder eine erforderliche neue endständige Position auf dem Regalförderzeug vom Träger für Fördergut eingenommen wird, um zielgerecht im neuen Regalfach durch das Regalförderzeug abgesetzt zu werden. Dadurch ist es nicht mehr erforderlich, mehrmals das Fördergut abzusetzen, um es wieder erneut aufzunehmen und es wird auch durch die Erfindung erstmals ein zielgerechtes Ablagern kleinerer Container in einem nur aus einer Stahlkonstruktion bestehenden Lagerfach durchgeführt werden ohne im Lagerfach weitere Hilfmittel vorsehen zu müssen, um Zwischenpositionen in diesen Lagerfächern ansteuern zu können.

Die Positionierung kann während der Gassenfahrt des Regalförderzeugs durchgeführt werden. Durch eine derartige Positionierung während der Gassenfahrt wird die Dauer einer Ein- oder Auslagerung bzw. Umstapelung beachtlich verringert.

Durch diese Verfahrensweise werden zwei sich überlagernde Bewegungen von dem Regalförderzeug durchgeführt, zum einen das Hineinbringen eines großen Containers in ein Lagerfach und gleichzeitig eine dieser Bewegung überlagerte Bewegung, die es ermöglicht ohne zusätzlichen Freiraum, den einzulagernden Container in seiner Gesamtlänge in das Lagerfach einzubringen ohne daß dieser mit seinem rückwärtigen Teil in die Lagergasse hineinragt. Damit wird auch eine Kompaktbauweise eines derartigen Hoch- oder Tiefregallagers erreicht, welche die Sicherheit derartiger Lager erhöht. Weiterhin wird durch diese erfinderische Ausgestaltung erreicht, daß Lagerfächer, die in ihrer Tiefe genau dem größten Container angepasst sind, ohne zusätzliche Hilfs- und Endanschläge vorsehen zu müssen, die bei einem Überschreiten der vorgegebenen Einlagerungskontur im Fach einen Alarm auslösen. Gemäß der Erfindung wird bereits auf dem Regalförderzeug bei der Übernahme eines jeden Containers beispielsweise dessen Abmessungen mit den Abmessungen der Stellplatztiefe verglichen und somit vom Regalförderzeug aus die optimale Einlagerung bewirkt.

Durch die erfindungsgemäße Anordnung des antreib- und arretierbaren Rollentisches auf den antreib- und arretierbaren Laufrollensätzen wird erreicht, daß in einfachster Weise eine überlagerte Bewegung sowohl beim Einfahren in einen Lagerplatz oder auch beim Ausfahren aus dem Lagerplatz durchgeführt werden kann, wodurch insbesondere bei der Umstapelung von verschieden großen Containern ein Zwischenabstellen der Container in anderen Lagerfächern vollkommen wegfällt, da der heb- und senkbare Rollentisch bereits eine entsprechende Reihung spätestens auf dem Regalförderzeug selbst, beispielsweise bei der Ausgabe der umgestapelten Container bewirkt.

In weiterer Ausgestaltung der Erfindung wird vorgeschlagen, daß im Regalförderzeug eine Steuereinrichtung vorgesehen ist, daß die Steuereinrichtung in Abhängigkeit einer vorgegebenen zielgerechten endständigen Lagerung der Träger, die Stillsetzung der Rollen des Rollentisches der Laufrollensätze und das Senken oder Heben des Rollentisches bewirkt. Hierdurch wird ein mehretagiges Hoch- oder Tiefregallager realisiert, welches ohne jede Endabschaltung lediglich vom Regalförderzeug aus bedienbar wird, was zu einer beachtlichen Einsparung an Hilfseinrichtungen, wie Endschaltern und Sicherheitseinrichtungen führt. Zwangsläufig fallen auch hierdurch zusätzliche Sicherheitswege weg innerhalb Lagers in Richtung der horizontalen und vertikalen Bewegung des Regalförderzeugs und der Erstreckung des Lagers quer hierzu. Weiterhin wird hierdurch erreicht, daß keine Steuerung für einen zusätzlichen Aufzug zu den einzelen Etagen erforderlich ist. Außer dem Wegfall des Aufzugs wird auch bei der Längsfahrt des Regalförderzeugs durch eine Schrägfahrt des zu transportierenden Containers bereits ein rascheres Erreichen der angegebenen Endlagerstelle erreicht und es kann bei dieser Schrägfahrt bereits eine Positionierung des einzulagernden Gutes vorgenommen werden. Gleiches gilt auch für die Auslagerung oder auch bei einer Umstapelung.

In weiterer Ausgestaltung wird vorgeschlagen, daß bei Anordnung von Regalen links und rechts der Fahrgasse, der mindestens eine Rollentisch durch Umkehr seiner Förderrichtung mit Hilfe seiner mindestens zweier Laufrollensätze Stellplätze in beiden Regalseiten bedient. Durch diese Ausgestaltung ist ein Umstapeln von der rechten zur linken Regalseite in jeder beliebigen Höhe der einzelnen Regalseite ohne weiteres möglich und zwar ohne zusätzliche Hilfsmittel einzusetzen.

Weiter wird vorgeschlagen, daß der mindestens eine Rollentisch aus mehreren hintereinander miteinander elastisch verbundenen Teilrollentischen besteht. Durch eine derartige Anordnung wird erreicht, daß bei biegeschlaffen Paletten, wie sie beispielsweise als Flugzeugpaletten verwendet werden, eine gleichmäßige Belastung der Palette bei gleichförmiger Belastung des mindestens einen Rollentisches und der mindestens zwei Laufrollensätze während des Ein- und Ausladens und auch während des Umstapelns bewirkt wird. Insbesonder lassen sich bei Anordnung mehrerer derartiger Rollentische und mit mehreren derartigen Laufrollensätzen nebeneinander auf einem Tisch eines Regalförderzeugs bauliche Ungleichförmigkeiten in den Lagerplätzen ausgleichen, ohne daß eine zu hohe Belastung des einzelnen Rollentischs oder der mit diesem zusammenarbeitenden Laufrollensätze auftritt.

Anstelle der Ausgestaltung der erfinderischen Vorrichtung, bei welcher ein Rollentisch aus mehreren hintereinander miteinander elastisch verbundenen Teilrollentischen mit den dazugehörigen Teillaufrollensätzen besteht, wird nach Anspruch 5 eine Vorrichtung vorgeschlagen, die sich dadurch auszeichnet, daß bei einem Tisch oder mehreren neben- oder übereinander oder in einem Kreuz mit 90 Grad Abstand zueinander angeordneten Tischen und auf jedem Tisch angeordneten mehreren hintereinander angeordneten Teillaufrollensätzen mit Teilrollentischen jeder Teillaufrollensatz und jeder Teilrollentisch einen Stromanschluß für die auf dem mindestens einen Tisch angeordnete Stromversorgung trägt. Durch die Anordnung mehrerer voneinander getrennter hintereinander angeordneter Teillaufrollensätze mit Teilrollentischen ist es erstmals gemäß der Erfindung durchführbar, die Lagertiefe in den einzelnen Regalen unabhängig von der Breite der Fahrgasse des Regalförderzeugs auszugestalten. Durch die Anordnung mehrerer nebeneinander oder übereinander angeordneter Tische mit jeweils darauf befindlichen mehreren Einheiten bestehend aus jeweils einem autarken Fahrzeug, welches aus Teillaufrollensätzen und mindestens einem Teilrollentisch besteht, wird erreicht, daß die der Erfindung zugrundeliegende Aufgabe des zielgerechten Ablagerns in der Endposition auch dann durchgeführt werden kann, wenn die Lagertiefe eines Regals ein vielfaches der Fahrbreite des Gassenfahrzeugs ist. Damit wird insbesondere erreicht, daß keine zusätzlichen Neuinvestitionen für das Regalförderzeug durchgeführt werden müssen, auch wenn die einzelnen Regale durch anfügen weiterer Regalraster in die Tiefe des Regals wachsen.

Eine Ausgestaltung dieser Vorrichtung sieht vor, daß die Teillaufrollensätze und die Teilrollentische in Abhängigkeit der Länge eines Containers kuppelbar sind. Damit wird erreicht, daß auch bei derart tiefen Lagern ein Zwischenabsetzen eines Containers bei Umsetzen in ein anderes Lagerfach wegfällt.

In weiterer Ausgestaltung dieser Vorrichtung wird auch vorgeschlagen, daß zwischen der Stromversorgung auf dem Tisch oder den Tischen und den Stromanschlüssen an den Teilrollensätzen und Teilrollentischen teleskopierbare Stromschienen vorgesehen sind und daß die Teillaufrollensätze und Teilrollentische Schleifer als Stromabnehmer tragen. Durch die Ausgestaltung der Stromübertragung über teleskopierbare Stromschienen wird trotz beibehaltener ursprünglicher Gassenbreite erfindungsgemäß eine zielgerechte Beschickung auch sehr tiefer Lager erreicht, da entsprechend der Anzahl der Teleskopelemente eine praktisch beliebige Verlängerung der Stromversorgung bei kompakter Anordnung erreicht wird.

Anstelle der Stromversorgung über teleskopierbare Stromschienen oder einer abrollbaren Kabelverbindung kann auch vorgesehen sein, daß bei einem Tisch oder mehreren neben- oder übereinander oder in einem Kreuz mit 90 Grad Abstand zueinander angeordneten Tischen und auf jedem Tisch angeordneten mehreren hintereinander angeordneten Teillaufrollensätzen mit Teilrollentischen jeder Teilrollensatz und jeder Teilrollentisch eine Batterie trägt und daß die Ladestation für die Batterien auf dem mindestens einen Tisch vorhanden ist. Hierdurch wird im Hinblick auf eine freie Beweglichkeit der autarken Einheiten im Hinblick auf deren Unabhängigkeit ein beachtlicher vereinfachender Schritt erzielt.

Durch die erfindungsgemäße mehrfache Anordnung von Tischen neben- oder übereinander oder als Übergabestern, bei welchem lediglich dafür zu sorgen ist, daß die um 90 Grad versetzten Tische so gegeneinander verschiebbar sind, daß beim Beladen eines derartigen Regalförderzeugs der in Nullage stehende Tisch beim Beladen des um 90 Grad hierzu nach oben versetzten Tisches sich soweit nach unten bewegt oder bei Beladen des unter einem Winkel von 270 Grad angeordneten Tisches sich soweit nach oben bewegen, daß eine Durchtrittshöhe erreicht wird, durch welche der einzelne Container gefahrlos auf dem Tisch der um 270 Grad gegenüber dem Ersten versetzt angeordnet ist, aufgelagert werden kann. Hierdurch wird eine Kompaktbauweise erreicht, in einfachster Form ein mehretagiges Lager von mindestens der vierfachen Tiefe auf einer Seite des Lagergangs zu errichten, wenn Container verwendet werden, die der Breite des Lagergangs entsprechen.

Werden Container kleinerer Größe eingelagert und bestehen die einzelnen Tische aus mehreren autarken hintereinander angeordneten Einheiten, ist eine noch größere Erweiterung des mehretagigen Lagers ohne weiteres möglich.

Die Erfindung wird anhand eines Ausführungsbeispiels nachfolgend näher beschrieben. Hierbei zeigen:
- Figur 1: ein Hochregallager mit Regalförderzeug und Lagerplätzen in verschiedenen Etagen einschließlich Zu- und Abgang zum Hochregallager im Querschnitt,
- Figur 2: eine Etage eines Hochregallagers in Draufsicht mit mehreren nebeneinander angeordneten an Rollentischen auf einem Tisch eines Regalförderzeugs und einem Stellplatz,
- Figur 3: einen vergrößerten Ausschnitt aus einem Rollentisch einschließlich einem Laufrollensatz,
- Figur 4: einen heb- und senkbaren Rollentisch in Draufsicht mit diesen tragenden Laufrollensätzen,
- Figur 5: eine Ansicht eines Regalförderzeugs mit in einem Kreuz im Abstand von 90 Grad angeordneten Tischen und
- Figur 6: eine Ansicht des Regalförderzeugs gemäß Figur 5 mit Blickrichtung A.

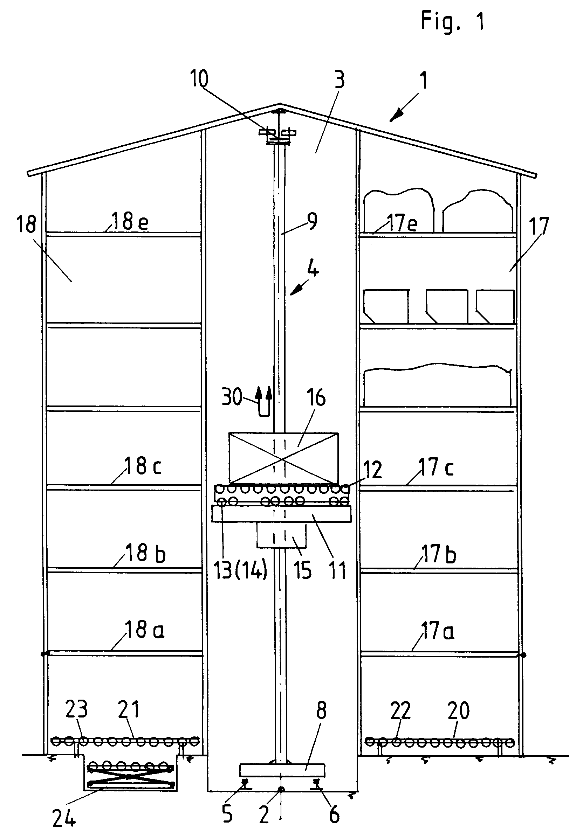

Bei den in den Figuren 1 bis 4 dargestellten Bauteilen handelt es sich um eine beispielhafte Ausgestaltung des Erfindungsgegenstandes als Hochregallager; der Erfindungsgegenstand ist in derselben Weise auch bei einem mehretagigen Tiefregallager beispielsweise unterhalb einer Verkehrs- oder Umschlagsebene einsetzbar. Gleichwirkende Ausgestaltungen werden als unter den Schutzumfang der Ansprüche der vorliegenden Erfindung fallend erachtet.

Gleiche Bauteile werden in den einzelnen Figuren mit den gleichen Bezugsziffern bezeichnet.

In einem Gebäude 1 verläuft entlang einer Mittenachse 2 eine Fahrgasse 3 für ein Regalförderzeug 4.

Das Regalförderzeug 4 stützt sich auf Fahrschienen 5,6 ab, welche parallel zur Mittenachse 2 auf einer Verkehrsfläche 7 in horizontaler Richtung verlaufen.

Das Regalförderzeug 4 besitzt einen Fahrrahmen 8 mit daran angeordneten mehreren nicht dargestellten Laufrädern zur Horizontalbewegung des Regalförderzeugs auf dem Fahrschienenpaar 5,6. Am Fahrrahmen 8 des Regalförderzeug 4 ist ein vertikaler Mast 9 angeordnet, der gemäß Ausführungsbeispiel nach Figur 1 in eine Führungsschiene 10 im Dachbereich des Gebäudes 1 geführt wird.

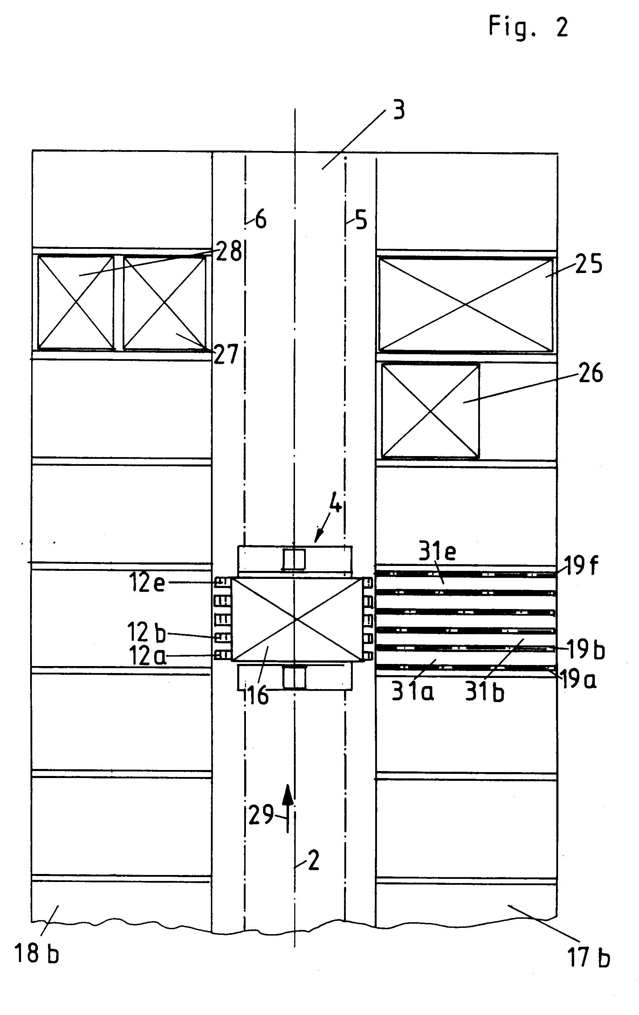

An diesem vertikalen Mast 9 ist ein in vertikaler Richtung verfahrbarer Tisch 11 angeordnet, der einen in Figur 2 in Draufsicht dargestellten Rollentisch 12 trägt, der sich über Laufrollensätze 13,14 auf dem Tisch 11 abstützt.

Der Tisch 11 besitzt darüberhinaus eine Antriebs- und Steuereinheit 15 mittels der die Bewegung der Laufrollensätze 13,14 und die Bewegung des Rollentisches 12 in horizontaler Richtung an vorbestimmter Stelle arretiert werden kann. Auch wird durch die Antriebs- und Steuereinheit 15 der Rollentisch 12 mit einem auf diesem befindlichen Container 16 angehoben oder abgesenkt.

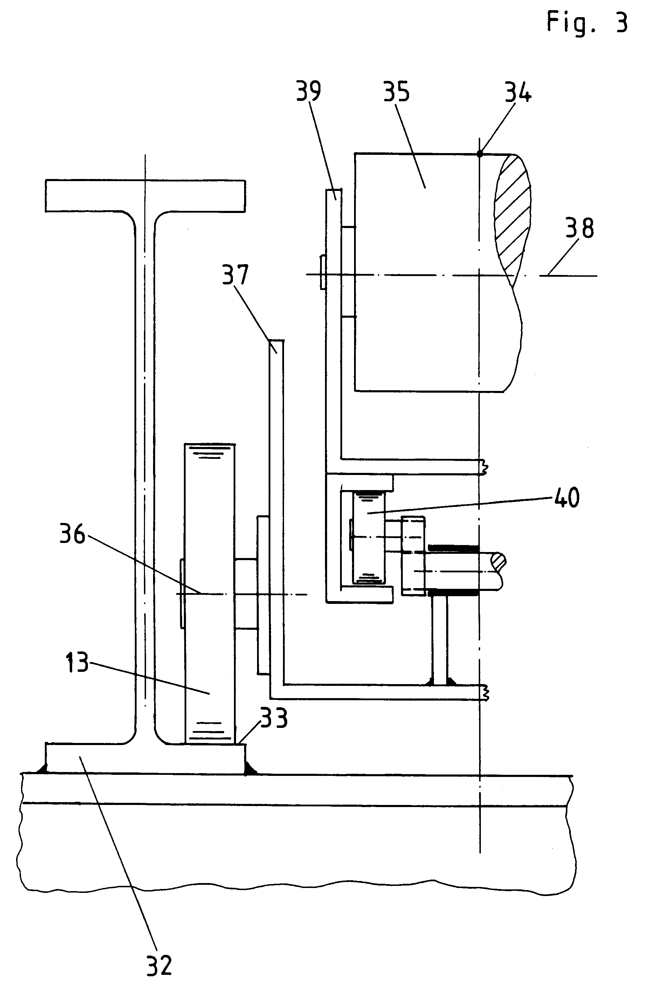

Links und rechts der Fahrgasse 3 befinden sich Regale 17,18, in welchen in mehreren Etagen Stellplätze 17a bis e bzw. 18a bis e angeordnet sind. Die Ausgestaltung dieser Stellplätze 17a bis e bzw. 18a bis e als Auflagestützen 19a bis d wird in Zusammenhang mit der Beschreibung der Figur 3 näher erläutert.

Die Regale 17,18 besitzen je eine Umschlagebene 20,21, welche bevorzugt mit einem arretierbaren Rollenboden 22 bzw. 23 ausgestattet sind, damit ankommende oder auszulagernde Güter über diese Rollenböden 22,23 entweder direkt mit dem Rollentisch 12 in Verbindung gebracht werden können oder es kann, wie auf der linken Seite unterhalb des Regals 18 angedeutet, ein heb- oder senkbarer Scherentisch 24, der an seiner Oberseite ebenfalls Rollen trägt, an die Stelle des Rollenbodens 23 treten, so daß beispielsweise ein Lastkraftwagen bis an den Scherentisch 24 heranfahren kann, dort seine komplette Ladung an die Rollen übergeben kann, welche dann vom Rollentisch 12 entsprechend gesteuert von der Antriebs- und Steueeinheit 15 übernommen werden kann, um auf einem vorgegebenen Stellplatz, z. B. 17e, zwischengespeichert zu werden oder direkt über den Rollentisch 12 an die Umschlagebene 20 weitergegeben werden kann, welche beispielsweise mit einem Vorfeldförderer (nicht dargestellt) zusammenarbeitet, der zur Beladung eines Flugzeugs dient.

Die in Figur 2 dargestellte Draufsicht auf eine Etage des Hochregallagers, beispielsweise wie Etage 17b und 18, zeigt nun das entlang der Mittenachse 2 und senkrecht zu dieser mehrere Gruppen von Auflagestützen 19a,b,c,d,e,f zu einem Stellplatz in der Stellplatzebene 17b bzw. 18b zusammengefaßt sind.

Im Ausführungsbeispiel der Figur 2 sind in der Stellplatzebene 17b beispielsweise 10 Gruppen von Auflagerstützen 19a bis f angeordnet. Diese Gruppen von Auflagerstützen 19a bis f stellen jeweils einen Lagerplatz dar, der entweder mit einem größten Container 25 oder mit einer Mehrzahl oder einzelner kleiner Container 26,27,28 belegt sein kann. Dabei können die kleinen Container in ihrer Abmessung variieren beispielsweise ein viertel oder ein drittel oder eine halbe Länge eines größten Containers 25.

Die Beschickung der Gruppen von Auflagerstützen 19a bis f geschieht nun folgendermaßen:
Das Regalförderzeug 4 fährt auf den Fahrschienen 5,6 in der Fahrgasse 3 nach Übernahme eines Containers 16 einmal in Pfeilrichtung 29 in horizontaler Richtung und gleichzeitig (vergleiche Figur 1) durch vertikale Bewegung gemäß Doppelpfeil 30 des Tisches 11 in einer für den Container 16 sich darstellenden diagonalen Richtung zu der ausgewählten Gruppe von Auflagerstützen 19a bis f. Dort wird spätestens nunmehr mit Hilfe der Antriebs- und Steuereinheit 15 der auf dem Rollentisch 12 befindliche Container angehoben und durch Bewegen des Rollentisches 12 entweder in Richtung auf die Stellplattenebene 17e oder die Stellplattenebene 18b in die Position auf dem Rollentisch verbracht, in der der Container anschließend von der Gruppe von Auflagerstützen 19a bis f aufgenommen werden soll. Es wird also vor Erreichen des endständigen Lagerplatzes bereits auf dem Rollentisch 12 die Position im Lagerfach bereits festgelegt. Anschließend fährt der aus mehreren Rollentischen 12a bis d bestehende Rollentisch 12 in Zwischenräume 31a bis e der Gruppen von Auflagerstützen 19a bis f ein. Dabei stützt sich jeder der mehreren Rollentische 12a bis d über die zugehörigen Laufrollensätze 13 und 14 auf je zwei nebeneinander liegenden Auflagerstützen beispielsweise 19a und 19b ab. Gleichzeitig stützt sich der noch nicht ausgefahrene Teil der mehreren Rollentische über die Laufrollensätze auf dem Tisch 11 ab. Hat nunmehr der Container 16 die vorgeschriebene Lage in der Gruppe von Auflagerstützen 19a bis f erreicht, wird durch die Antriebs- und Steuereinheit 15 der Rollentisch und die Laufrollensätze arretiert; der Rollentisch 12, welcher aus mehreren Rollentischen 12a bis d besteht, abgesenkt und zusammen mit den Laufrollensätzen 13,14 auf den Tisch 11 des Regalförderzeugs 4 zurückgefahren.

Anschließend kann entweder von einer anderen Gruppe von Auflagerstützen 19a bis f beispielsweise Kleincontainer 26 mit Hilfe des Rollentischs 12 entnommen werden und auf dem Rollentisch 12 bereits so positioniert werden, daß anschließend ein kleiner Container 27 zusammen mit den kleinen Container 26 in vorgeschriebener Positon in eine andere Etage des Hochregallagers verfahren werden kann, beispielsweise zum Umstapeln oder zum Aufbau einer Charge für den Weitertransport.

Der in Figur 3 dargestellte vergrößerte Ausschnitt aus einem Rollentisch einschließlich einem Laufrollensatz zeigt, daß hier eine der Auflagerstützen 19 als Doppel-T-Träger 32 ausgebildet ist, auf dessen Innenflansch 33 ein Laufrollensatz 13 abrollt. Bei der Figur 3 wird lediglich zur Erhöhung der Übersichtlichkeit ein Laufrollensatz 13 dargestellt. Die Anordnung der Laufrollensätze 13,14 ist symmetrisch zur Mitte 34 des einzelnen Rollentischs 12, welcher aus mehreren hintereinander angeordneten Rollen 35 besteht.

Im Ausführungsbeispiel nach der Figur 3 ist der Laufrollensatz 13 über eine Achse 36 mit einem Hilfsrahmen 37 verbunden, in welchem sich die Rollen 35 des Rollentischs 12 befinden. Die Rollen 35 werden über Rollenachsen 38 in einem Tragrahmen 39 geführt, der über einen Exzenter 40 mit dem Hilfsrahmen 37 verbunden ist. Hierdurch wird es möglich, daß durch Ansteuerung des Exzenters über die Anbtriebs- und Steuereinheit 15 ein Heben und Senken der Rollen 35 des Rollentischs 12 geschieht, um entweder einen Container positioniert auf einer Gruppe von Auflagerstützen 19a bis f abzulegen oder dort aufzunehmen.

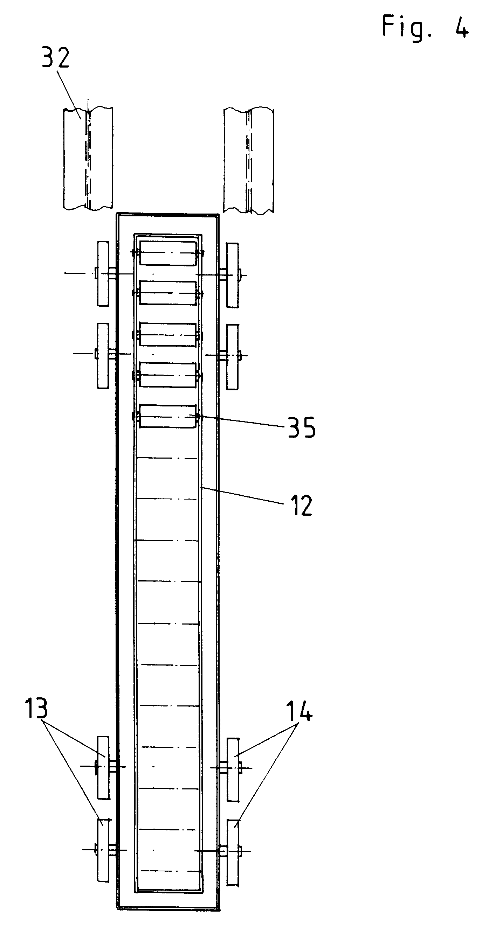

Figur 4 zeigt in Draufsicht die Laufrollensätze 13,14, welche wie zur Figur 3 bereits beschrieben, mit den Rollen 35 des jeweiligen Rollentischs 12 verbunden sind.

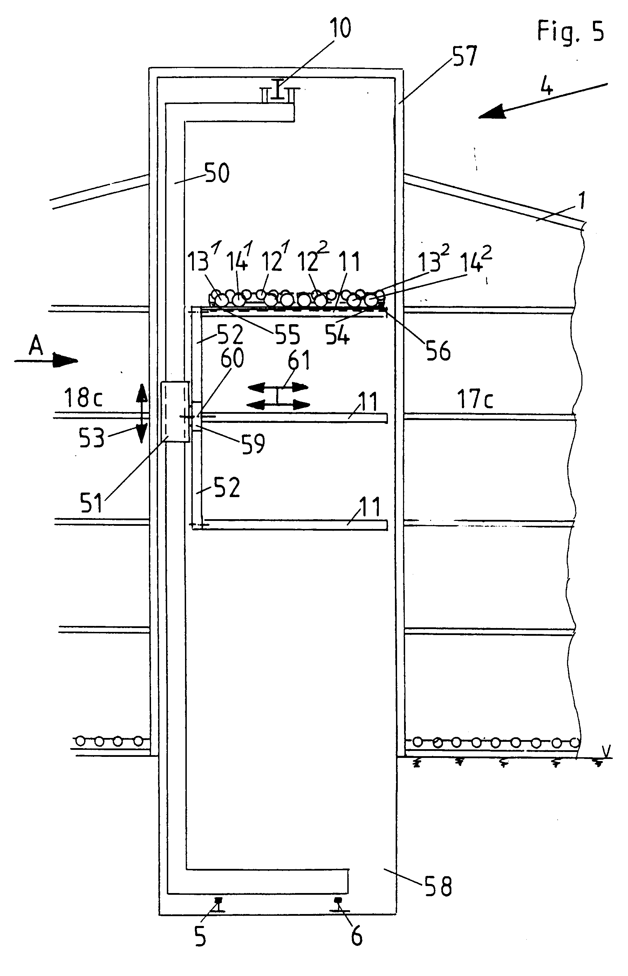

Auf den Fahrschienen 5,6 stützt sich gemäß Figur 5 ein auskragender Mast 50 eines Regalförderzeugs 4 ab, der im Dachbereich des Gebäudes 1 in der Führungsschiene 10 geführt ist.

Am auskragenden Mast 50 ist ein Schieber 51 angeordnet, der in Richtung des Doppelpfeils 53 während der Fahrt des auskragenden Mastes 50 auf den Fahrschienen 5,6 beispielsweise vor die Stellplätze 17c bzw. 18c bewegt wird.

Am Schieber 51 sind vier Arme 52 angeordnet (vergleiche auch Figur 5), welche an ihren Enden jeweils einen Tisch 11 tragen. Der Tisch 11 trägt nunmehr, wie zu den Figuren 1 bis 4 bereits ausgeführt, entweder mindestens je einen Rollentisch 12, der sich über mindestens ein Paar von Laufrollensätzen 13,14 auf dem jeweiligen Tisch abstützt oder es können auch autarke Einheiten, bestehend aus Rollentischen 12 und Laufrollensätzen 13,14, vorgesehen werden, wobei in Figur 5 zwei derartige autarke Einheiten 12¹, 13¹, 14¹ und 12², 13², 14² hintereinander auf einem Tisch 11 dargestellt sind. Die autarken Einheiten 12¹, 13¹, 14¹ bzw. 12², 13², 14² sind im Ausführungsbeispiel gemäß Figur 5 nicht miteinander gekuppelt und besitzen Schleifer 54,55, die mit an den Tischen 11 angeordneten teleskopierbaren Stromschienen 56 zusammenwirken und von einer Strom- und Datenversorgung 70 versorgt werden.

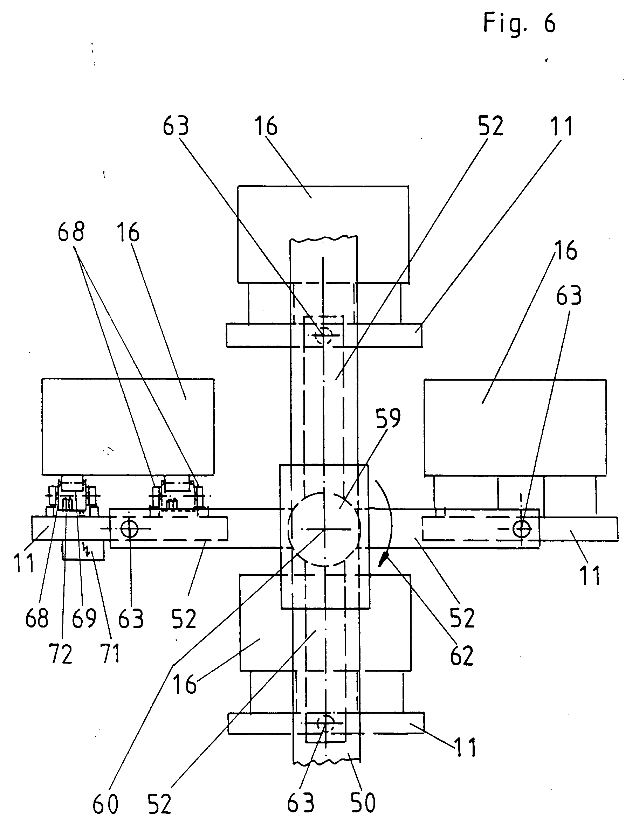

Im Ausführungsbeispiel gemäß Figur 5 trägt das Gebäude 1 einen zusätzlichen Dom 57 und eine Vertiefung 58, damit die auf dem oberen Tisch 11 stehenden ein- oder auszulagernden oder umzuschichtenden Container bei einer Drehbewegung eines Drehkreuzes 59 ( vergleiche auch Figur 6) frei drehbar um ein Drehzentrum 60 (Figur 5) sich bewegen können.

Die an dem Drehkreuz 59 über Arme 52 angeordneten Tische 11 können in derselben Weise gemäß Doppelpfeil 61 die Regale 17 oder 18 bedienen.

Die Ansicht des Regalförderzeugs 4 gemäß Figur 6 in Blickrichtung A zeigt den auskragenden Mast 50, an welchem am Drehkreuz 59, welches sich im Ausführungsbeispiel entsprechend dem gebogenen Pfeil 62 bewegen kann. Am Drehkreuz 59 sind vier Arme 52 angeordnet, an welchen über Zapfen 63 die Tische 11 angeordnet sind. Auf den Tischen 11 befinden sich nun entsprechend der Breite der zu transportierenden Container 16 mehrere Teilrollenlaufsätze 68 und mit diesen zusammenarbeitende Teilrollentische 69 nebeneinander auf dem Tisch 11 und bilden somit eine autarkes System, von welchem mehrere in Richtung auf die Regale 17 bzw. 18 hintereinander angeordnet sein können. Am Tisch 11 ist eine Ladestation 71 für die Versorgung von in den autarken Systemen 68,67 angeordneten Batterien vorgesehen.

Durch eine derartige sternförmige Anordnung ist es möglich, bei einer vorgegebenen Fahrgassenbreite und einer beliebigen Tiefe der Regale 17,18 bei einer einzigen Schrägfahrt des Regalförderzeugs 4 die auf den Tischen stehenden Container 16 bereits so vorzupositionieren, daß sie bei Erreichen der endständigen Etagen positioniert auf den vorgesehenen hintereinander angeordneten Stellplätzen in der einzelnen Etage abgestellt werden können. Auch ist eine Umstapelung mit der Vorpositionierung auf eine neue endständige Lagerung hierdurch in umfassender Weise sehr leicht möglich.

## Patentansprüche

1. Vorrichtung zum Ein- oder Auslagern bzw. Umstapeln von Trägern (16) für Fördergut in bzw. aus einem Regal (17,18) mit einer Vielzahl von Stellplätzen, mit einem Regalförderzeug (4), das entlang einer Regalseite verfahrbar ist, und das ein in die Stellplätze bewegbares Lastaufnahmemittel (12) aufweist, dadurch gekennzeichnet, daß das Lastaufnahmemittel (12) Rollen (35) zum Positionieren der Träger (16) aufweist, daß das Lastaufnahmemittel (12) als mindestens ein heb- und senkbarer Rollentisch ausgebildet ist und sich über mindestens zwei vom Regalförderzeug (4) antreibbare und arretierbare Laufrollensätze (13,14) auf einem Tisch (11) abstützt, daß die mindestens zwei antreibbaren und arretiebaren Laufrollensätze im Falle des EinAuslagerns oder Umstapelns von Trägern in oder aus einem Stellplatz einer Regalseite mit in dem Stellplatz vorhandenen Auflagestützen zusammenwirken, daß im Regalförderzeug (4) eine Steuereinrichtung (15) vorgesehen ist, welche in Abhängigkeit einer vorgegebenen zielgerechten endständigen Lagerung der Träger (16), die Stillsetzung der Rollen (35) des Rollentisches, der mindestens zwei Laufrollensätzen (13,14) und das Senken oder Heben des mindestens einen Rollentisches (12) bewirkt.

2. Vorrichtung nach Anspruch 1, dadurch gekennzeichnet, daß bei Anordnung von Regalen links und rechts der Fahrgasse, der mindestens eine Rollentisch (12) einschließlich der mindestens zwei Laufrollensätze (13,14) durch Umkehr seiner Förderrichtung Stellplätze in beiden Regalseiten bedienen kann.

3. Vorrichtung nach einem der vorhergehenden Ansprüche, dadurch gekennzeichnet, daß der mindestens eine Rollentisch (12) aus mehreren hintereinander miteinander elastisch verbundenen Teilrollentischen (12a-e) besteht.

4. Vorrichtung nach einem der vorhergehenden Ansprüche, dadurch gekennzeichnet, daß bei einem Tisch oder mehreren neben- oder übereinander oder in einem Kreuz mit 90 Grad Abstand zueinander angeordneten Tischen (11) und auf jedem Tisch angeordneten mehreren hintereinander angeordneten Teillaufrollensätzen (13,14,68) mit Teilrollentischen (12a-e,69) jeder Teillaufrollensatz und jeder Teilrollentisch einen Stromanschluß für die auf dem mindestens einen Tisch angeordnete Stromversorgung trägt.

5. Vorrichtung nach Anspruch 4, dadurch gekennzeichnet, daß die Teillaufrollensätze (68) und die Teilrollentische (69) in Abhängigkeit der Länge eines Trägers (16) kuppelbar sind.

6. Vorrichtung nach Anspruch 4 oder 5, dadurch gekennzeichnet, daß zwischen der Stromversorgung auf dem Tisch (11) und den Stromanschlüssen an den Teillaufrollensätzen (68) und Teilrollentischen (69) teleskopierbare Stromschienen vorgesehen sind, und daß die Teillaufrollensätze und Teilrollentische Schleifer als Stromabnehmer tragen.

7. Vorrichtung nach einem der Ansprüche 1 bis 5, dadurch gekennzeichnet, daß bei einem Tisch (11) oder mehreren neben- oder übereinander oder in einem Kreuz mit 90 Grad Abstand zueinander angeordneten Tischen (11) und auf jedem Tisch angeordneten mehreren hintereinander angeordneten Teillaufrollensätzen (68) mit Teilrollentischen (69), jeder Teillaufrollensatz und jeder Teilrollentisch eine Batterie trägt und daß eine Ladestation für die Batterien auf dem mindestens einen Tisch (11) angeordnet ist.

## Claims

1. Device for storage and retrieval and/or stacking of carriers (16) for material to be handled into and/or out of a rack (17/18) with a plurality of locations, by means of a stacker crane (4) movable along a rack side and equipped with a load-carrying device (12) able to move into the locations, characterized in that the load-carrying device (12) has rollers (35) for the positioning of the carriers, that the load-carrying device (12) is designed in the form of not less than one roller desk capable of being lifted or lowered and that it is supported by a platform (11) via not less than two roller sets (13,14) drivable or lockable by the stacker crane (4), that in case of storage and retrieval or stacking of carriers into or out of the location at a rack side, the not less than two drivable and lockable roller sets act together with supports available in the location, that an open loop control system (15) is provided in the stacker crane (4) which, depending on a preset precise final storage of the carriers (16) causes the stop of the roller desk rollers (35), of the not less than two roller sets (13,14) and of the lifting and lowering of the not less than one roller desk (12).

2. Device as per claim 1, characterized in that due to the reversal of its conveying direction, the not less than one roller desk (12) with the not less than two roller sets (13,14) may serve locations on both rack sides in case of rack arrangement on the right and on the left of the aisle.

3. Device as per one of the above-mentioned claims, characterized in that the not less than one roller desk (12) is composed of several roller desk sections (12a-e) which are elastically connected one after the other.

4. Device as per one of the above-mentioned claims, characterized in that in case of a desk or several desks arranged beside one another or one above the other or like a cross at an angle of 90 degrees to each other (11) and in case of several roller set sections (13,14,68) with roller desk sections (12a-e, 69) arranged on each platform one behind the other, each roller set section and each roller desk section is provided with a power connection for the power supply arranged on the not less than one platform.

5. Device as per claim 4, characterized in that the roller set sections (68) and the roller desk sections (69) can be coupled depending on the length of a carrier (16).

6. Device as per claim 4 or 5, characterized in that telescopic conductor rails are provided between the power supply on the platform (11) and the power connections at the roller set sections (68) and roller desk sections (69) and that the roller set sections and the roller desk sections carry slider contacts as current collectors.

7. Device as per one of the claim 1 to 5, characterized in that in case of a platform (11) or several platforms (11) arranged beside one another or one above the other or like a cross at an angle of 90 degrees to each other and in case of several roller set sections (68) with roller desk sections (69) arranged one behind the other on the platform, each roller set section and each roller desk section is provided with a battery on the at least one platform (11).

## Revendications

1. Dispositif servant à emmagasiner ou à décharger, ou à empiler des conteneurs (16) pour produits en vrac dans un rayonnage ou hors d'un rayonnage (17,18) comprenant un grand nombre de travées de stockage, avec l'aide d'un engin de manutention pour rayonnages (4), qui se déplace le long d'un côté du rayonnage, et qui est muni d'une table porte-charge (12) pouvant être déplacée dans la travée de stockage ; caractérisé en ce que la table porte-charge (12) est équipée de rouleaux (35) pour positionner les conteneurs (16), que la table porte-charge (12) est conçue au moins comme une table à rouleaux pouvant être levée et abaissée, qui soit - par l'intermédiaire de non moins de deux jeux de rouleaux (13,14), entraînés et arrêtés par l'engin de manutention pour rayonnages (4) - en appui sur une plateforme (11), qu'en cas d'emmagasinage ou de déchargement, ou d'empilage des conteneurs à l'intérieur ou hors d'une travée de stockage d'un côté du rayonnage concourre avec les barres d'appui qui se trouvent dans la travée, et qu'un dispositif de commande (15) soit prévu dans l'engin manutention pour rayonnages (4) qui, en fonction d'un stockage ayant pour destination des conteneurs (16) un endroit prédéterminé et définitif, produise l'arrêt des rouleaux (35) de la table à rouleaux, de non moins de deux jeux de rouleaux (13,14) ainsi que l'abaissement ou l'élévation d'au moins une table porte-charge à rouleaux (12).

2. Dispositif conforme à la revendication 1, caractérisé en ce que en cas de disposition des rayonnages à gauche et à droite d'une ruelle de déplacement, au moins une table porte-charge à rouleaux (12) y compris non moins de deux jeux de rouleaux (13,14) puissent, par inversion du sens de convoyage, désservir les travées de stockage des deux côtés de rayonnages.

3. Dispositif conforme à l'une des revendications prédédentes, caractérisé en ce que au moins une table porte-charge à rouleaux (12) se compose de plusieurs sections de table (12a-e) reliées entre elles, l'une derrière l'autre par une liaison flexible.

4. Dispositif selon l'une des revendications précédentes caractérisé en ce que sur l'une des plateformes, ou plusieurs plateformes (11) placées l'une près de l'autre ou l'une au-dessus de l'autre, ou en croix, écartées à 90 degrés l'une par rapport à l'autre, et les sections de jeux de rouleaux (13,14,68) avec les sections de tables porte-charge à rouleaux (12a-e,69) disposées l'une derrière l'autre sur chaque plateforme, chaque section de jeux de rouleaux et chaque section de table à rouleaux est équipée d'une connexion électrique pour l'alimentation de courant disposée sur l'une au moins des tables.

5. Dispositif selon la revendication 4, caractérisé en ce que les sections de jeux de rouleaux (68) et les sections de tables à rouleaux (69) peuvent être couplées en fonction de la longueur d'un conteneur (16).

6. Dispositif selon la revendication 4 ou 5, caractérise en ce que des barres téléscopiques sont prévues entre l'alimentation en courant sur la plateforme (11) et les connexions électriques qui se trouvent sur les sections des jeux de rouleaux (68) et sur les sections de tables à rouleaux (69), et que les sections de jeux de rouleaux et les sections de tables à rouleaux portent des patins an qualité de récepteurs de courant.

7. Dispositif selon l'une des revendications 1 à 5, caractérisé en ce que l'une des tables porte-charge (11) ou plusieurs de ces tables (11) disposées l'une à côté de l'autre, ou au-dessus l'une de l'autre, ou disposées en croix, avec un écartement de 90 degrés l'une par rapport à l'autre et plusieurs sections de jeux de rouleaux (68) disposés l'une derrière l'autre sur chaque table, chaque section de jeux de rouleaux et chaque section de table à rouleaux porte une batterie et qu'une station de recharge de batteries est se trouve disposée sur au moins l'une des tables porte-charge (11).
